# EUROPEAN PATENT APPLICATION

(11) **EP 0 732 373 A1**
(43) Date of publication of application: **18.09.1996**
(21) Application number: 96103427.9
(22) Date of filing: 06.03.1996
(51) Int. Cl.: C08L 83/04, C08K 5/3472

(54) **Curable silicone composition**

(30) Priority: 16.03.1995 JP 84975/95
(71) Applicant: Dow Corning Toray Silicone Company Limited, Tokyo (JP)
(72) Inventor: Enami, Hiroji, Main Office for Research and Dev., Ichihara-shi, Chiba Prefecture (JP); Saiki, Takeaki, Main Office for Research and Dev., Ichihgara-shi, Chiba Prefecture (JP)
(74) Representative: Fleischer, Holm Herbert

(57) **Abstract**

A curable silicone composition which exhibits excellent handling characteristics prior to its cure, and that yields a colorless, highly flame-retardant, transparent or translucent cured silicone. This composition contains an organopolysiloxane that has an average of at least 2 silicon-bonded alkenyl groups in each molecule; a second organopolysiloxane that contains an average of at least 2 silicon-bonded hydrogen atoms in each molecule; a triazole compound; and a platinum catalyst.

## Description

This invention relates to curable silicone compositions that exhibit excellent handling characteristics prior to cure and that yield colorless, highly flame-retardant, and transparent or translucent cured silicones.

Curable silicone compositions produce cured silicone gels, rubbers, and resins that have excellent electrical properties, heat resistance, weatherability, and stress-relaxation capacity. As a result, these compositions have found use as sealants, shock-absorbing elements, anti-vibration elements, and fillers in electrical or electronic components. The prior art of these compositions are typified by: JP-A 48-17847; US-A 4,374,967; and JP-A 5-209127.

However, the colorless, transparent or translucent cured silicones afforded by cure of the above mentioned compositions suffer from the problem of poor flame retardancy, and this problem is particularly acute for silicone gel compositions. As a result, these compositions cannot be used to seal or fill electrical and electronic components that will reside at high temperatures for long periods of time, such as power modules and the like.

Likewise, JP-As 61-69865 and 6-16937 have proposed silicone rubber compositions directed toward improving the flame retardancy of cured silicones.

However, these proposed compositions contain large amounts of inorganic fillers and as a result have very low fluidities or very poor handling characteristics. Moreover, the cured silicones afforded by cure of these compositions are opaque and limited in color to white, black, and gray.

The present invention takes as its object the introduction of a curable silicone composition which exhibits excellent handling characteristics prior to its cure, and that yields a colorless, highly flame-retardant, transparent or translucent silicone rubber after cure.

The curable silicone compositions of the present invention comprise
(A) 100 parts by weight of a first organopolysiloxane containing an average of at least 2 silicon-bonded alkenyl groups per molecule, having a viscosity at 25°C of 50 to 100,000 mPa.s (centipoise), and containing no more than 0.1 weight percent of a cyclic diorganosiloxane having degree of polymerization of between 4 to 10, inclusive;
(B) an organopolysiloxane containing an on average of at least 2 silicon-bonded hydrogen atoms per molecule and having a viscosity at 25°C of 1 to 100,000 mPa.s (centipoise), added in a quantity that provides a value from 0.1 to 1.5 for the molar ratio of silicon-bonded hydrogen atoms per silicon-bonded alkenyl radicals in component (A);
(C) 0.0001 to 1 parts by weight of a triazole compound; and
(D) a platinum catalyst in an amount that provides from 0.01 to 1,000 parts by weight of platinum metal per million parts by weight of the combined weight of components (A) and (B).

The organopolysiloxane (A) of the present composition has a viscosity at 25°C from 50 to 100,000 mPa.s (centipoise) and preferably from 100 to 50,000 mPa.s (centipoise). The bases for this range are as follows: when the viscosity at 25°C falls below 50 mPa.s (centipoise), the physical properties of the ultimately obtained cured silicone will be strongly diminished; and the handling characteristics of the resulting composition are strongly impaired at above 100,000 mPa.s (centipoise). Component (A) contains on average at least 2 silicon-bonded alkenyl groups in each molecule. These alkenyl groups are exemplified by vinyl, allyl, butenyl, pentenyl, and hexenyl, wherein vinyl is specifically preferred. The non-alkenyl silicon-bonded organic groups in component (A) are exemplified by alkyl groups such as methyl, ethyl, propyl, butyl, pentyl, and hexyl; cycloalkyl groups such as cyclopentyl, or cyclohexyl; aryl groups such as phenyl, tolyl, and xylyl; aralkyl groups such as benzyl, or phenethyl; and halogen-substituted alkyl groups such as 3,3,3-trifluoropropyl, or 3-chloropropyl. Methyl and phenyl are specifically preferred. The molecular structure of component (A) is not critical and is exemplified by straight chain, branched structures, partially branched straight chain, network structures, and resins. Component (A) may be a homopolymer or copolymer with these molecular structures, or even a mixture of the preceding. However, component (A) preferably contains at least a straight-chain molecular structure. Component (A) contains no more than 0.1 weight percent of cyclic diorganosiloxane with a degree of polymerization (DP) between 4 to 10, inclusive. The basis for this condition is as follows: the organopolysiloxane afforded by reequilibration polymerization ordinarily contains more than 0.1 weight percent of cyclic diorganosiloxane with a DP of 4 to 10, but the cured silicone prepared using such organopolysiloxane has a poor flame retardancy.

The organopolysiloxane, component (B), functions as a crosslinker for the instant composition. Component (B) has a viscosity at 25°C from 1 to 100,000 mPa.s (centipoise), and preferably from 1 to 5,000 mPa.s (centipoise). Further, component (B) contains on average at least 2 silicon-bonded hydrogen atoms in each molecule. The silicon-bonded organic groups in component (B) are not critical, and are exemplified by alkyl groups such as methyl, ethyl, propyl, butyl, pentyl, and hexyl; cycloalkyl groups such as cyclopentyl, or cyclohexyl; aryl groups such as phenyl, tolyl, and xylyl; aralkyl groups such as benzyl, or phenethyl; and halogen-substituted alkyl groups such as 3,3,3-trifluoropropyl, or 3-chloropropyl. Methyl and phenyl are specifically preferred. The molecular structure of component (B) is not critical and is exemplified by straight chain, branched structures, partially branched straight chain, cyclic structures, network structures, and resins. Component (B) may be a homopolymer or copolymer with these molecular structures or a mixture of the preceding.

Component (B) is added in a quantity that provides a value from 0.1 to 1.5 for the molar ratio of silicon-bonded hydrogen in this component to silicon-bonded alkenyl in component (A). Compositions in which this molar ratio is less than 0.1 do not undergo a thorough cure. Compositions in which this molar ratio exceeds 1.5 will cure into a very hard cured silicone whose surface develops a large number of cracks.

The triazole compound, component (C), is already known as an agent for imparting flame retardancy to curable silicone compositions. However, because it has not been able by itself to provide a satisfactory flame retardancy, it has generally been used in combination with another flame retardant. We have now found that this component is by itself a satisfactory flame retardant when the main component (i.e. component (A)) is an organopolysiloxane that contains no more than 0.1 weight percent of a cyclic diorganopolysiloxane having a DP of 4 to 10 inclusive. The present invention was achieved based on this finding. The triazole compound is exemplified by 1,2,3-triazole, 1,2,4-triazole, benzotriazole, and their derivatives. Benzotriazole and derivatives thereof are specifically preferred. Derivatives of 1,2,3-triazole are 1-methyl-1,2,3-triazole, 1-phenyl-1,2,3-triazole, 4-methyl-2-phenyl-1,2,3-triazole, 1-benzyl-1,2,3-triazole, 4-hydroxy-1,2,3-triazole, 1-amino-1,2,3-triazole, 1-benzamido-4-methyl-1,2,3-triazole, 1-amino-4,5-diphenyl-1,2,3-triazole, 1,2,3-triazole aldehyde, 2-methyl-1,2,3-triazole-4-carboxylic acid, and 4-cyano-1,2,3-triazole. Derivatives of 1,2,4-triazole are 1-methyl-1,2,4-triazole, 1,3-diphenyl-1,2,4-triazole, 5-amino-3-methyl-1,2,4-triazole, 3-mercapto-1,2,4-triazole, 1,2,4-triazole-3-carboxylic acid, 1-phenyl-1,2,4-triazole-5-one, and 1-phenylurazole. Derivatives of benzotriazole are 1-methylbenzotriazole, 5,6-dimethylbenzotriazole, 2-phenylbenzotriazole, 1-hydroxybenzotriazole, methyl 1-benzotriazolecarboxylate, and 2-(3',5'-dibutyl-2'-hydroxyphenyl)benzotriazole. Since component (C) is frequently a solid at room temperature, it is preferably added after dissolution in an organic solvent to promote its homogeneous dispersion in the composition of the present invention. The organic solvent is exemplified by toluene, xylene, methyl and isobutyl ketone. As desired, this organic solvent is preferably removed from the resulting composition before its subsequent cure.

Component (C) is added at 0.0001 to 1 parts by weight and preferably at 0.01 to 0.5 parts by weight, per 100 parts by weight of component (A). Compositions containing less than 0.0001 parts by weight of component (C) per 100 parts of component (A) will yield a cured silicone having poor flame retardency. Compositions containing more than 1 part by weight have very poor curability.

The platinum catalyst, component (D) is a catalyst whose function is to accelerate the cure of our claimed composition. This component is exemplified by chloroplatinic acid, alcohol solutions of chloroplatinic acid, platinum-olefin complexes, and platinum-divinyltetramethyldisiloxane complexes.

Component (D) is added in a quantity that provides from 0.01 to 1,000, and preferably from 0.1 to 500, weight-ppm of platinum per the combined amounts of components (A) and (B). A thorough cure is not obtained when the composition contains less than 0.01 weight-ppm of platinum. Compositions containing more than 1,000 ppm will yield cured silicones that turn brown when heated.

The curable silicone composition of the present invention is prepared by mixing components (A) through (D) to homogeneity. These curable silicone compositions may also contain other optional components insofar as the object of the invention is not impaired. For example, fillers such as fumed silica; fumed silica that has been hydrophobicized by treatment with organosilicon compounds; addition reaction retarders such as acetylenic compounds, hydrazine compounds, phosphine compounds, and mercaptan compounds; pigments; dyes; fluorescent dyes; heat stabilizers; non-triazole flame retardants; plasticizers; and adhesion promoters may all be added.

No specific restrictions attach to the outcome for the cured silicone afforded by the curable silicone composition of this invention. For example, the cured silicone may be a silicone gel, silicone rubber, or silicone resin. Moreover, even the silicone gels will surprisingly exhibit an excellent flame retardancy. These silicone gels preferably have a one-quarter consistency as specified in Japanese Industrial Standard (JIS) K 2220 in the range from 20 to 200. The stress relaxation capacity of these silicone gels is reduced, and they readily crack when they are hard, i.e., they have a one-quarter consistency according to JIS K 2220 below 20. On the other hand, these silicone gels are easily fluidized by vibration when they are soft, i.e., they have a one-quarter consistency according to JIS K 2220 in excess of 200.

The procedure for curing our curable silicone composition is not critical and is exemplified by holding the subject composition at room temperature and by heating it at 50°C to 200°C. The cured silicone thereby obtained can be deployed as such, but it is ordinarily adhered on a substrate and, for example, is preferably used as a fill or seal for electrical and electronic devices. Its use as filling or sealing materials for power modules and the like is particularly preferred. The cured silicone is colorless and transparent or translucent, but it can be readily converted to any desired color by the admixture of a pigment or dye.

The curable silicone composition of the present invention will be explained in greater detail through working examples. The viscosity values reported therein were measured at 25°C. The one-quarter consistency and flame retardancy of the cured silicones were measured as follows.

### Measurement of the one-quarter consistency of the cured silicones

The cured silicone was prepared by pouring 40 g of the curable silicone composition into a 50-mL glass beaker and heating at 120°C for 30 minutes. After the cured silicone had been cooled to 25°C, measurement was carried out as specified in JIS K 2220 using a 6.4 mm (1/4-inch) cone.

### Measurement of the flame retardancy of the cured silicones

A cured silicone test specimen (width = 12.7 mm, length = 127 mm, thickness = 3 mm or 6 mm) was prepared by pouring the curable silicone composition into a TEFLON™ frame and heating at 120°C for 30 minutes. TEFLON is a registered trademark of E.I.DuPont of Wilmington, DE. The test specimen was set in a vertical position, and the bottom end of the test specimen was then held for approximately 10 seconds in approximately the center of a 20-mm flame (blue flame = 10 mm) from a gas burner (main component = methane gas). The gas burner was then removed, and the time was measured until complete extinction of the flame on the test specimen. The same procedure was run again immediately after complete extinction of the flame on the test specimen, and the time until complete extinction was again measured. This series was run on each of 5 test specimens, and the total time for the 10 measurements is reported.

### Example 1

The following were mixed to homogeneity to give a silicone gel composition: 100 parts by weight of an organopolysiloxane (content of cyclic dimethylsiloxane with DP of 4 to 10 = 500 weight-ppm) composed of 50.0 weight percent of dimethylvinylsiloxy-endblocked dimethylpolysiloxane with a viscosity of 2,000 mPa.s (centipoise) and 50.0 weight percent of dimethylvinylsiloxy-endblocked dimethylpolysiloxane with a viscosity of 450 mPa.s (centipoise), 0.85 parts by weight of trimethylsiloxy-endblocked dimethylsiloxane-methylhydrogensiloxane copolymer with a viscosity of 5 mPa.s (centipoise) (dimethylsiloxane unit to methylhydrogensiloxane unit molar ratio = 3 to 5), 0.4 part by weight of a 4.2 weight percent methyl isobutyl ketone solution of benzotriazole, and 1.0 weight part platinum-divinyltetramethyldisiloxane complex with a platinum concentration of 0.5 weight percent. The molar ratio of the silicon-bonded hydrogen in the dimethylsiloxane-methylhydrogensiloxane copolymer to the vinyl group in the organopolysiloxane was 0.46. This silicone gel composition had a viscosity of 1,300 mPa.s (centipoise) and had excellent handling characteristics. Heating this silicone gel composition for 30 minutes at 120°C yielded a silicone gel. The appearance, one-quarter consistency, and flame retardancy of this silicone gel were evaluated, and the results are reported in Table 1.

### Example 2

The following were mixed to homogeneity to give a silicone gel composition: 100 parts by weight of an organopolysiloxane (content of cyclic dimethylsiloxane with DP of 4 to 10 = 500 weight-ppm) composed of 47.4 weight percent dimethylvinylsiloxy-endblocked dimethylpolysiloxane with a viscosity of 2,000 mPa.s (centipoise) and 52.6 weight percent dimethylvinylsiloxy-endblocked dimethylpolysiloxane with a viscosity of 450 mPa.s (centipoise), 5.3 weight parts fumed silica (specific surface area = 200 m²/g) whose surface had been hydrophobicized by treatment with hexamethyldisilazane, 0.84 part by weight of trimethylsiloxy-endblocked dimethylsiloxane-methylhydrogensiloxane copolymer with a viscosity of 5 mPa.s (centipoise) (dimethylsiloxane unit to methylhydrogensiloxane unit molar ratio = 3 to 5), 0.63 weight part of a 4.2 weight percent methyl isobutyl ketone solution of benzotriazole, and 1.1 parts by weight of platinum-divinyltetramethyldisiloxane complex with a platinum concentration of 0.5 weight percent. The molar ratio of the silicon-bonded hydrogen in the dimethylsiloxane-methylhydrogensiloxane copolymer to the vinyl group in the organopolysiloxane was 0.45. This silicone gel composition had a viscosity of 1,850 mPa.s (centipoise) and had excellent handling characteristics. Heating this silicone gel composition for 30 minutes at 120°C yielded a silicone gel. The appearance, one-quarter consistency, and flame retardancy of this silicone gel were evaluated, and the results are reported in Table 1.

### Example 3

The following were mixed to homogeneity to give a silicone gel composition: 100 parts by weight of an organopolysiloxane (content of cyclic dimethylsiloxane with a DP of 4 to 10 = 450 weight-ppm) composed of 48.0 weight percent dimethylvinylsiloxy-endblocked dimethylpolysiloxane with a viscosity of 2,000 mPa.s (centipoise) (content of cyclic dimethylsiloxane with a DP of 4 to 10 = 500 weight-ppm), 40.0 weight percent dimethylvinylsiloxy-endblocked dimethylpolysiloxane with a viscosity of 450 mPa.s (centipoise) (content of cyclic dimethylsiloxane with DP 4 to 10 = 500 weight-ppm), and 12.0 weight% of organopolysiloxane resin with the average unit formula

{(CH₃)₃SiO_{1/2}}_{39.7}{(CH₃)₂(CH₂=CH)SiO_{1/2}}_{4.8}(SiO_{4/2})_{55.5};

0.75 part by weight of trimethylsiloxy-endblocked dimethylsiloxane-methylhydrogensiloxane copolymer with a viscosity of 5 mPa.s (centipoise) (dimethylsiloxane unit to methylhydrogensiloxane unit molar ratio = 3 to 5); 0.6 part by weight of a 4.2 weight percent methyl isobutyl ketone solution of benzotriazole; and 1.0 part by weight of platinum-divinyltetramethyldisiloxane complex with a platinum concentration of 0.5 weight percent. The molar ratio of the silicon-bonded hydrogen in the dimethylsiloxane-methylhydrogensiloxane copolymer to the vinyl group in the organopolysiloxane was 0.28. This silicone gel composition had a viscosity of 2,000 mPa.s (centipoise) and had excellent handling characteristics. Heating this silicone gel composition for 30 minutes at 120°C yielded a silicone gel. The appearance, one-quarter consistency, and flame retardancy of this silicone gel were evaluated, and the results are reported in Table 1.

### Comparative Example 1

The following were mixed to homogeneity to give a silicone gel composition: 100 parts by weight of organopolysiloxane (content of cyclic dimethylsiloxane with a DP of 4 to 10 = 500 weight-ppm) composed of 50.0 weight percent dimethylvinylsiloxy-endblocked dimethylpolysiloxane with a viscosity of 2,000 mPa.s (centipoise) and 50.0 weight percent of dimethylvinylsiloxy-endblocked dimethylpolysiloxane with a viscosity of 450 mPa.s (centipoise), 0.80 part by weight of trimethylsiloxy-endblocked dimethylsiloxane-methylhydrogensiloxane copolymer with a viscosity of 5 mPa.s (centipoise) (dimethylsiloxane unit to methylhydrogensiloxane unit molar ratio = 3 to 5), 0.0025 part by weight of 3-phenyl-1-butyn-3-ol, and 0.2 weight part of platinum-divinyltetramethyldisiloxane complex with a platinum concentration of 0.5 weight percent. The molar ratio of the silicon-bonded hydrogen in the dimethylsiloxane-methylhydrogensiloxane copolymer to the vinyl group in the organopolysiloxane was 0.48. This silicone gel composition had a viscosity of 1,300 mPa.s (centipoise) and had excellent handling characteristics. Heating this silicone gel composition for 30 minutes at 120°C yielded a silicone gel. The appearance, one-quarter consistency, and flame retardancy of this silicone gel were evaluated, and the results are reported in Table 1.

### Comparative Example 2

The following were mixed to homogeneity to give a silicone gel composition: 100 parts by weight of an organopolysiloxane (content of cyclic dimethylsiloxane with a DP of 4 to 10 = 500 weight-ppm) composed of 50.0 weight percent of dimethylvinylsiloxy-endblocked dimethylpolysiloxane with a viscosity of 2,000 mPa.s (centipoise) and 50.0 weight percent of dimethylvinylsiloxy-endblocked dimethylpolysiloxane with a viscosity of 450 mPa.s (centipoise), 0.75 part by weight of trimethylsiloxy-endblocked dimethylsiloxane-methylhydrogensiloxane copolymer with a viscosity of 5 mPa.s (centipoise) (dimethylsiloxane unit to methylhydrogensiloxane unit molar ratio = 3 to 5), 43.0 parts by weight of precipitated silica micropowder, 0.7 part by weight of carbon black; 0.7 part by weight of 3-phenyl-1-butyn-3-ol, and 0.3 part by weight of platinum-divinyltetramethyldisiloxane complex with a platinum concentration of 0.5 weight percent. The molar ratio of the silicon-bonded hydrogen in the dimethylsiloxane-methylhydrogensiloxane copolymer to the vinyl group in the organopolysiloxane was 0.45. This silicone gel composition had a viscosity of 4,000 mPa.s (centipoise) and had poor handling characteristics. Heating this silicone gel composition for 30 minutes at 120°C yielded a silicone gel. The appearance, one-quarter consistency, and flame retardancy of this silicone gel were evaluated, and the results are reported in Table 1.

### Comparative Example 3

The following were mixed to homogeneity to give a silicone gel composition: 100 parts by weight of an organopolysiloxane (content of cyclic dimethylsiloxane with a DP of 4 to 10 = 2,500 weight-ppm) composed of 50.0 weight percent dimethylvinylsiloxy-endblocked dimethylpolysiloxane with a viscosity of 2,000 mPa.s (centipoise) and 50.0 weight percent of dimethylvinylsiloxy-endblocked dimethylpolysiloxane with a viscosity of 450 mPa.s (centipoise), 0.85 part by weight of trimethylsiloxy-endblocked dimethylsiloxane-methylhydrogensiloxane copolymer with a viscosity of 5 mPa.s (centipoise) (dimethylsiloxane unit to methylhydrogensiloxane unit molar ratio = 3 to 5), 0.4 part by weight of a 4.2 weight percent of methyl isobutyl ketone solution of benzotriazole, and 1.0 part by weight of platinum-divinyltetramethyldisiloxane complex with a platinum concentration of 0.5 weight percent. The molar ratio of the silicon-bonded hydrogen in the dimethylsiloxane-methylhydrogensiloxane copolymer to the vinyl group in the organopolysiloxane was 0.43. This silicone gel composition had a viscosity of 1,200 mPa.s (centipoise) and had excellent handling characteristics. Heating this silicone gel composition for 30 minutes at 120°C yielded a silicone gel. The appearance, one-quarter consistency, and flame retardancy of this silicone gel were evaluated, and the results are reported in Table 1.

**Table 1**

| | Examples | | | Comparative Examples | | |
|---|---|---|---|---|---|---|
| | Example 1 | Example 2 | Example 3 | Comp. Ex. 1 | Comp. Ex. 2 | Comp. Ex. 3 |
| cured silicone appearance | colorless transparent gel | colorless translucent gel | colorless transparent gel | colorless transparent gel | black opaque gel | colorless transparent gel |
| one-quarter consistency | 53 | 55 | 80 | 61 | 77 | 65 |

| flame-retardancy (seconds) | | | | | | |
|---|---|---|---|---|---|---|
| 3-mm thickness | 72 | 61 | 82 | 410 | 105 | 93 |
| 6-mm thickness | 60 | 28 | 52 | 268 | 67 | 75 |

## Claims

1. A curable silicone composition comprising:
(A) 100 parts by weight of a first organopolysiloxane containing an average of at least 2 silicon-bonded alkenyl groups per molecule, having a viscosity at 25°C of 50 to 100,000 mPa.s (centipoise), and containing no more than 0.1 weight percent of a cyclic diorganosiloxane having a degree of polymerization of between 4 to 10, inclusive;
(B) a second organopolysiloxane containing an average of at least 2 silicon-bonded hydrogen atoms per molecule and having a viscosity at 25°C of 1 to 100,000 mPa.s (centipoise);
(C) 0.0001 to 1 part by weight of a triazole compound; and
(D) a platinum catalyst in an amount that provides from 0.01 to 1,000 parts by weight of platinum metal per million parts by weight of the combined weight of components (A) and (B);
wherein said composition has a molar ratio of silicon-bonded hydrogen atoms in said second organopolysiloxane (B) to alkenyl radicals present in said first organopolysiloxane (A) of from 0.1 to 1.5.

2. The curable silicone composition according to Claim 1, wherein said composition yields, upon cure, a silicone gel having a one-quarter consistency, according to Japanese Industrial Standard K 2220, of 20 to 200.
